# EUROPÄISCHE PATENTSCHRIFT

(11) **EP 2 631 599 B1**
(45) Veröffentlichungstag und Bekanntmachung des Hinweises auf die Patenterteilung: **20.06.2018**
(21) Anmeldenummer: 13151782.3
(22) Anmeldetag: 18.01.2013
(51) Int. Cl.: G01D 4/00

(54) **Verfahren zur Anonymisierung von Messwerten von Smart-Metern**
Method for the anonymisation of measuring values from smart meters
Procédé d'anonymisation de valeurs de mesure de compteurs intelligents

(30) Priorität: 24.02.2012 DE 102012202849
(43) Veröffentlichungstag der Anmeldung: 28.08.2013
(73) Patentinhaber: Bundesdruckerei GmbH, 10969 Berlin (DE)
(72) Erfinder: Dietrich, Frank, 12437 Berlin (DE); Paeschke, Dr., Manfred, 16348 Wandlitz (DE)
(74) Vertreter: Richardt Patentanwälte PartG mbB

(56) Entgegenhaltungen:
- WO-A1-2011/022499
- EFTHYMIOU C ET AL: "Smart Grid Privacy via Anonymization of Smart Metering Data", SMART GRID COMMUNICATIONS (SMARTGRIDCOMM), 2010 FIRST IEEE INTERNATIONAL CONFERENCE ON, IEEE, PISCATAWAY, NJ, USA, 4. Oktober 2010 (2010-10-04), Seiten 238-243, XP031790234, ISBN: 978-1-4244-6510-1
- QING ZHANG ET AL: "Aggregate Query Answering on Anonymized Tables", DATA ENGINEERING, 2007. ICDE 2007. IEEE 23RD INTERNATIONAL CONFERENCE ON, IEEE, PI, 1. April 2007 (2007-04-01), Seiten 116-125, XP031095755, ISBN: 978-1-4244-0802-3
- RAJ RAJAGOPALAN S ET AL: "Smart Meter Privacy: A Utility-Privacy Framework", ARXIV.ORG, CORNELL UNIVERSITY LIBRARY, 201 OLIN LIBRARY CORNELL UNIVERSITY ITHACA, NY 14853, 10. August 2011 (2011-08-10), XP080520261,
- Xiaokui Xiao ET AL: "Anatomy: Simple and Effective Privacy Preservation", , 15. September 2006 (2006-09-15), XP055279393, Gefunden im Internet: URL:http://www.vldb.org/conf/2006/p139-xia o.pdf [gefunden am 2016-06-09]

## Beschreibung

Die Erfindung betrifft ein Verfahren zur Anonymisierung von Messdaten, wobei die Messdaten von einem Smart-Meter erfasst wurden, sowie ein Computerprogrammprodukt und eine Vorrichtung zur Anonymisierung von Messdaten.

Unter dem Begriff des "Smart-Metering" wird allgemein der Gedanke verstanden, Kunden mit elektronischen Energieverbrauchs-Erfassungsgeräten auszustatten, um so neben einer einfachen Erfassung der verbrauchten Energie zum Beispiel über ein Netzwerk wie das Internet oder ein Powerline-Netzwerk oder ein Mobilfunk-Netzwerk sowohl dem Kunden als auch den Energieversorger weitere Funktionalitäten zur Verfügung zu stellen. Möglich ist dabei, dass sich der Kunde in Echtzeit über seinen aktuellen Energieverbrauch informieren kann. Unter dem Begriff des "Energieverbrauchs" wird dabei der Verbrauch des Kunden bezüglich jeglicher Art von Energie verstanden, welche in Haushalten und Unternehmen geliefert wird. Dies umfasst neben den Energieformen Strom, Wasser und Gas auch beliebige weitere Energieformen, wie beispielsweise Fernwärme.

Zur Erfassung des Energieverbrauchs kommen beim jeweiligen Verbraucher intelligente Messsysteme, auch intelligente Zähler oder "Smart-Meter" genannt, zum Einsatz. Smart-Meter sind Zähler für die verbrauchte Energie. Der Verbraucher kann dabei eine natürliche oder juristische Person sein, welche verschiedene messbare Energieformen wie Strom, Gas, Wasser oder Wärme verbraucht. Ziel der Verwendung von Smart-Metern ist die Implementierung intelligenter Messsysteme, was beispielsweise die Erhebung von variablen Leistungsentgelten in Abhängigkeit von Gesamtnachfrage und Netzauslastung ermöglichen würde. Dadurch können sich Energieversorgungsnetze insgesamt besser ausnutzen lassen.

Aus der technischen Richtlinie des BSI TR-03109 ist es bekannt, einen sogenannten Smart-Meter Gateway, auch Konzentrator genannt, als eine zentrale Kommunikationseinheit vorzusehen, welche mit einzelnen oder mehreren Smart-Metern kommunizieren kann. Der Gateway ist dazu in der Lage, mit Geräten im sogenannten "Home Area Network" und mit Geräten im "Wide Area Network" zu kommunizieren. Das Home Area Network umfasst dabei alle Smart-Meter, welche an den Gateway angekoppelt sind, so wie zum Beispiel private Recheneinheiten der Verbraucher. Die privaten Recheneinheiten können zum Beispiel zur Information über aktuelle, mit dem Smart-Meter erfasste Energieverbrauchswerte eingesetzt werden. Das Wide Area Network ist dazu ausgebildet, um eine Kommunikation von Gateway und autorisierten Marktteilnehmern zu ermöglichen. Beispielsweise kann das Gateway die Daten aller Smart-Meter sammeln und diese an eine übergeordnete Sammelstelle, beispielsweise einen Energieversorger oder einen Messstellenbetreiber, zur Verfügung stellen.

Die Erfassung von Messdaten durch die Smart-Meter kann dabei mit einer unterschiedlichen Genauigkeit, das heißt Granularität, erfolgen. Die Granularität beschreibt dabei die zeitliche Auflösung, mit welcher Energieverbrauchsmesswerte erfasst werden, um zum Abruf für die autorisierten Marktteilnehmer bereitgestellt zu werden. Insbesondere sind für Stromverkäufer und Netzbetreiber hochgranulare Verbrauchsdaten interessant, da diese zur Vorhersage von Lastspitzen, zu Planungszwecken und insgesamt zu Netzoptimierungen herangezogen werden können. Abhängig von der Granularität und daher der Genauigkeit der Messung und zeitlichen Auflösung ist es jedoch möglich, nach Auswertung der Messdaten Rückschlüsse auf die Verhaltensweisen der die Smart-Meter betreffenden Haushalte bzw. Personen zu ziehen. Eine gezielte Analyse der Messdaten ermöglicht eine Profilerstellung, zum Beispiel für einzelne Haushalte, wobei zum Beispiel durch eine entsprechende Messwerteanalyse aufgrund des charakteristischen Zeit-Leistungsprofils eines TV-Geräts auf die betrachtete Sendung zurückgeschlossen werden kann. Des Weiteren wäre eine Analyse der Aktiv/Passivzeiten im Haushalt möglich, die wiederum Annahmen über An- und Abwesenheitszeiten zulässt.

Ein Verfahren zur Anonymisierung von Smart-Meter-Messdaten mithilfe eines Treuhänders ist bekannt aus C. Efthymiou, G. Kalogridis: "Smart grid privacy via anonymization of smart metering data", in: First IEEE International Conference on Smart Grid Communications (SmartGridComm), IEEE, 2010, S. 238-243.

Der Erfindung liegt die Aufgabe zugrunde, ein Verfahren zur Anonymisierung von Messdaten, ein Computerprogrammprodukt und eine Vorrichtung zur Anonymisierung von Messdaten bereitzustellen.

Die der Erfindung zugrunde liegenden Aufgaben werden durch die Merkmale der unabhängigen Patentansprüche gelöst. Bevorzugte Ausführungsformen der Erfindung sind in den abhängigen Patentansprüchen angegeben.

Es wird ein Verfahren zur Anonymisierung von Messdaten angegeben, wobei die Messdaten mit einem Smart-Meter erfasst wurden, wobei das Verfahren eine Permutation der Messdaten umfasst, wobei die Granularität beibehalten wird und die Permutation die Anonymität der Messdaten erhöht. Durch die Permutation der Messdaten wird verhindert, dass auf charakteristische Zeit-Energieverbrauchsprofile zurückgeschlossen werden kann. Dem Energielieferant selbst entsteht dadurch kein Nachteil, da ihn lediglich interessiert, in welchem Tarif-Zeit-Intervall wie viel Energie verbraucht wurde. Nichtsdestotrotz wird insgesamt die Granularität der Messdaten unverändert beibehalten, was beispielsweise bei einem gezielten Verrauschen der Messdaten oder einer statistischen Zusammenfassung der Messdaten nicht möglich wäre. Wird insgesamt eine Permutation der Messdaten lediglich auf einen vorbestimmten Zeitraum begrenzt, innerhalb welchem eine Permutation zulässig ist, so ist der Messstellenbetreiber bzw. der Energieversorgung nichtsdestotrotz nach wie vor dazu in der Lage zu erkennen, ob zumindest bezüglich dieses Zeitraums beispielsweise Energieverbrauchsspitzen vorgelegen haben oder nicht. Durch das Verfahren der Permutation wird es somit dennoch dem Energielieferanten und Netzbetreiber ermöglicht, individuelle Planungen und Netzoptimierung inklusive der Vorhersage von Lastspitzen durchzuführen.

Nach einer Ausführungsform der Erfindung wird die Permutation durchgeführt bevor die Messdaten für eine Abfrage durch einen Energieversorger oder einen Messstellenbetreiber bereitgestellt werden. Alternativ ist es auch möglich, dass der Energieversorger oder Messstellenbetreiber durch eine Selbstverpflichtung eine Permutation der Messdaten durchführt, bevor diese zur Auswertung herangezogen werden.

Nach einer Ausführungsform der Erfindung werden die Messdaten zufällig permutiert. Dadurch wird verhindert, dass durch aufwendige Algorithmen auf das tatsächliche Energieverbrauchsprofil zurückgeschlossen werden kann.

Nach einer Ausführungsform der Erfindung wurden die Messdaten als Messdatenpunkte eines Messparameters mit einer zeitlichen Reihenfolge erfasst, wobei durch die Permutation die zeitliche Reihenfolge der Messdatenpunkte permutiert wird. Unter einem Messparameter wird dabei die Klasse von Messdaten verstanden, welche ein und derselben Messung durch das Smart-Meter zugeordnet sind. Beispielsweise könnte im Falle einer Stromverbrauchsmessung ein Messparameter die Leistung einer einzelnen Phase sein. Im Falle von drei Phasenleistungen ergeben sich damit drei unterschiedliche Messparameter, für welche jeweils das Smart-Meter entsprechende Messdaten sammelt. Ein weiterer Messparameter könnte beispielsweise ein Zählwerkstand des Smart-Meters sein. Einen noch weiteren Messparameter könnte beispielsweise im Falle des besagten Stromverbrauchmessers die Summenleistung aller drei Phasenleistungen darstellen.

Nach einer Ausführungsform der Erfindung umfassen die Messdaten Messdatenpunkte verschiedener Messparameter, wobei die Permutation ein Permutieren der Messdatenpunkte zwischen den verschiedenen Messparametern umfasst. In anderen Worten werden also Messdatenpunkte eines ersten Messparameters mit Messdatenpunkten eines zweiten Messparameters permutiert. Selbstverständlich sollte dies nur für solche Messparameter erfolgen, für welche es unerheblich ist, ob die jeweils zugehörigen Messdatenpunkte mit dem einen oder anderen Messparameter erfasst wurden. So könnte es beispielsweise im oben genannten Beispiel der drei Phasenleistungen unerheblich sein, ob mit dem Messparameter der Phase 1 zum gegebenen Zeitpunkt die Leistung 1 erfasst wurde, oder ob diese Leistung 1 mit dem Messparameter, welcher der zweiten Phase zugeordnet ist, erfasst wurde. Insofern könnte eine Permutation zwischen diesen beiden Phasenleistungsparametern problemlos möglich sein.

Insgesamt wird durch die Permutation zwischen den verschiedenen Messparametern weiter die Anonymität der Messdaten erhöht.

Nach einer weiteren Ausführungsform der Erfindung wurden die Messdatenpunkte innerhalb verschiedener Zeiträume eines Satzes von Zeiträumen erfasst, wobei die Permutation ein Permutieren der Messdatenpunkte zwischen den verschiedenen Zeiträumen umfasst. Beispielsweise dienen die Messdaten der Bestimmung eines Energieverbrauchs, wobei der Satz von Zeiträumen aus Zeiträumen besteht, für welche ein gleicher Energieabrechnungstarif für den durch die Messdaten bestimmbaren Energieverbrauch gültig ist. In diesem Fall ist es für den Energielieferanten für Energieverbrauchsabrechnungszwecke unerheblich, in dem einen oder dem anderen Zeitraum der besagte Energieverbrauch stattgefunden hat. Nichtsdestotrotz ist der Energielieferant präzise in der Lage, seinem Tarifmodell eine Energieabrechnung bezüglich des durch den Smart-Meter erfassten Energieverbrauchs vorzunehmen.

Nach einer weiteren Ausführungsform der Erfindung umfasst das Verfahren ferner einen Empfang oder eine Bestimmung des Satzes von Zeiträumen. Beispielsweise könnte der Energielieferant den Satz von Zeiträumen in einem für das permutierende Verfahren durchführende System verständlichen Format bereitstellen, sodass durch eine einfache Analyse und Verwendung der Tarifinformation die obig beschriebene Permutation über die verschiedenen Zeiträume möglich ist. Alternativ ist es möglich, dass das das Permutationsverfahren durchführende System die vom Energieversorger bereitgestellten Tarifinformationen analysiert und daraus selbstständig die verschiedenen Zeiträume bestimmt.

Nach einer weiteren Ausführungsform der Erfindung erfolgt die Bestimmung des Satzes von Zeiträumen durch den Smart-Meter oder einen dem Smart-Meter zugeordneten Smart-Meter Gateway.

Die Bestimmung des Satzes von Zeiträumen durch den Smart-Meter Gateway hat den Vorteil, dass damit eine zentrale Einheit bereitgestellt wird, welche als Interface für den Energielieferanten dient. Durch Kommunikation mit einem einzelnen Interface und damit einer einzelnen Vorrichtung "Gateway" kann damit der Energielieferant für eine Vielzahl von an den Gateway angeschlossenen Smart-Metern Tarifinformationen und zum Beispiel Konfigurationsdaten betreffend die Granularität der Erfassung der Messdaten bereitstellen.

In einem weiteren Aspekt betrifft die Erfindung ein Computerprogrammprodukt mit von einem Prozessor ausführbaren Instruktionen zur Durchführung der obig beschriebenen Verfahrensschritte.

In einem weiteren Aspekt betrifft die Erfindung eine Vorrichtung zur Anonymisierung von Messdaten, wobei die Messdaten mit einem Smart-Meter erfasst wurden, wobei die Vorrichtung dazu ausgebildet ist, eine Permutation der Messdaten durchzuführen, wobei die Granularität beibehalten wird und die Permutation die Anonymität der Messdaten erhöht.

Nach einer weiteren Ausführungsform der Erfindung sind die verschiedenen Zeiträume zeitlich voneinander beabstandet. Durch die zeitliche Beabstandung der Zeiträume wird die Anonymität der permutierten Messdaten weiter erhöht, da es damit wesentlich schwieriger wird, über einen verteilten Zeitraum reale Rückschlüsse auf charakteristische Zeit-Energieverbrauchsprofile zu schließen. Eine Profilerstellung für einzelne Haushalte durch gezielte Messwertanalyse wird dadurch nahezu unmöglich gemacht.

Nach einer weiteren Ausführungsform der Erfindung wird die Permutation durch den Smart-Meter selbst oder einem dem Smart-Meter zugeordneten Smart-Meter Gateway durchgeführt.

Im Folgenden werden bevorzugte Ausführungsformen der Erfindung anhand der Zeichnungen näher erläutert. Es zeigen:
- Figur 1: ein Blockdiagramm eines Systems bestehend aus Smart-Meter, Gateway und Energieversorgersystem,
- Figur 2: eine schematische Übersicht über die Möglichkeit zur Permutation von Messdaten,
- Figur 3: ein Flussdiagramm eines Verfahrens für Anonymisierung von Messdaten.

Im Folgenden werden einander ähnliche Elemente mit gleichen Bezugszeichen gekennzeichnet.

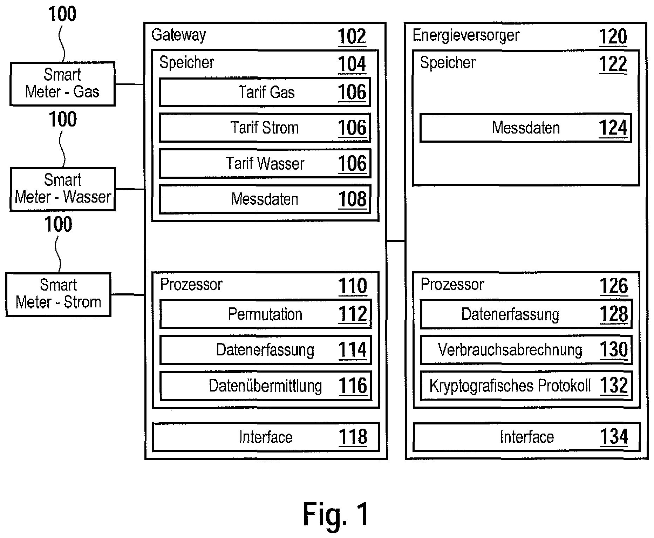

Die Figur 1 zeigt ein Blockdiagramm eines Systems bestehend aus mehreren Smart-Metern 100, einem Gateway 102 und einem "Energieversorger" 120, wobei es sich bei dem Energieversorger 120 um ein Computersystem eines Energieversorgers handelt. Die Smart-Meter 100 dienen dabei der Erfassung verschiedener Energieverbrauchswerte bezüglich zum Beispiel Gas, Wasser, Strom und weiteren nicht näher spezifizierten Energieformen. Die Smart-Meter sind dabei über entsprechende Kommunikationsverbindungen mit dem Interface 118 des Gateways 102 verbunden.

Die Smart-Meter 100 liefern in regelmäßigen Zeitabständen Messdaten 108 an den Gateway 102, wobei die Messdaten 108 in einem elektronischen Speicher 104 des Gateways 102 gespeichert werden. Die Datenerfassung erfolgt dabei mittels des Prozessors 110, welcher eine entsprechende Anwendung zur Datenerfassung 114 ausführt.

Die erfassten Messdaten enthalten dabei Messdatenpunkte verschiedener Messparameter, wobei im Falle eines zur Messung eines Stromenergieverbrauchs vorgesehenen Smart-Meters diese Messparameter einen aktuellen Zählwerkstand, drei Phasenleistungen und eine Summenleistung umfassen. Diese somit insgesamt fünf Messparameter werden durch den entsprechenden Smart-Meter 100 an den Gateway 102 übermittelt.

Im Folgenden wird davon ausgegangen, dass es sich bei dem Computersystem des Energieversorgers 120 auch tatsächlich direkt um das Computersystem handelt, welches durch den Energieversorger betrieben wird. Allerdings ist es auch möglich, dass der Energieversorger einen sogenannten "Messstellenbetreiber" beauftragt, welcher mit seinem Computersystem eine Sammlung der Messdaten und Übermittlung der gesamten Messdaten an den Energieversorger vornimmt. Daher kann die bezüglich des Energieversorgers 120 beschriebene Vorgehensweise zur Erfassung der Messdaten auch in analoger Weise übertragen werden auf einen entsprechenden Messstellenbetreiber.

Das Computersystem 120 des Energieversorgers weist wiederum einen elektronischen Speicher 122 und einen Prozessor 126 auf. Der Prozessor 126 kann unter anderem Instruktionen ausführen zur Durchführung von Schritten eines kryptografischen Protokolls 132 zur Durchführung einer Authentifizierung mit dem Gateway 102 und einer verschlüsselten Datenübertragung mit dem Gateway 102. Möglich ist jedoch auch die Durchführung von Datenübertragungen zwischen Gateway 102 und Energieversorger 120 ohne Verschlüsselung. Über sein Interface 134 kann der Energieversorger 120 mit dem Interface 118 des Gateways 102 Kontakt aufnehmen, um durch die durch den Prozessor 126 ausgeführte Anwendung zur Datenerfassung 128 die Messdaten 108 vom Gateway 102 abzufragen. Die so abgefragten Messdaten werden als Messdaten 124 im elektronischen Speicher 122 des Energieversorgers 120 abgelegt. Sie können in einem nachfolgenden Abrechnungsschritt mittels des Moduls 130 zur Verbrauchsabrechnung analysiert werden und entsprechend der Tarifvereinbarung als Verbrauchskosten dem Endverbraucher, welcher das entsprechende Smart-Meter 100 betreibt, in Rechnung gestellt werden.

Im Falle dessen die Smart-Meter 100 insbesondere dazu ausgebildet sind, mit geringer Granularität, zum Beispiel viertelstündlich, minütlich oder gar sekündlich Messdaten zu sammeln, bestünde die Gefahr, dass der Energieversorger 120 mit diesen Messdatenpunkten eine Profilerstellung des Energieverbrauchs bezüglich des Benutzers der Smart-Meter 100 durchführt. Untersuchungen haben gezeigt, dass es möglich ist, durch eine entsprechende Profilierung des Stromverbrauchs einzelne elektrische Geräte zu identifizieren. So ist es z.B. möglich, anhand einer Analyse des Stromverbrauchs die Hell-Dunkel-Abfolge von Fernsehbildern mit entsprechendem schwankenden Stromverbrauch einem konkreten Fernsehprogramm oder Fernsehfilm zuzuordnen. Damit wäre es theoretisch möglich, durch zum Beispiel Auswertung eines Stromverbrauchsprofils detaillierte Informationen über das Verhalten des Benutzers der Smartmeter zu gewinnen. Fließen in diese Profilierung auch zusätzlich die Informationen über den Verbrauch weiterer Energieformen wie Gas oder Wasser ein, könnte dadurch das komplette Verhalten des Endverbrauchers analysiert werden. Es könnte genau festgestellt werden, zu welchen Zeiten welches technische Gerät zu welchem Zweck betätigt wird. Es könnte festgestellt werden, wie oft zu welchem Zeitpunkt gewaschen wird, wie oft zu welchen Zeiten gekocht wird, welches Fernsehprogramm geschaut wird, zu welchen Zeiten der Verbraucher Zuhause ist, zu welchen Zeiten er schläft und vieles mehr.

Um dies zu vermeiden kann eine Permutation der Messdaten 108 durch den Gateway 102 durchgeführt werden. Es sei jedoch an dieser Stelle angemerkt, dass die Permutation der Messdaten 108 auch durch die Smart-Meter 100 selbst durchgeführt werden kann.

Die Permutation wird durch den Gateway 102 mittels dessen Prozessor unter Verwendung von Programminstruktionen 112 durchgeführt. Die so permutierten Messdaten werden wiederum im Speicher 108 des Gateways 102 abgelegt. Möglich ist es jedoch auch, einen separaten Speicherbereich im Speicher 106 zu verwenden, um die permutierten Messdaten abzulegen. Das Ablegen der permutierten Messdaten im Speicherbereich 108 hat jedoch den Vorteil, dass die Möglichkeit besteht, bereits permutierte Messdaten noch einmal zu permutieren. Durch fortlaufende Permutierungsprozesse wird die stochastische Verteilung der Messdatenpunkte signifikant erhöht, was die Gefahr einer Profilerstellung für einzelne Energieabnehmer minimiert.

Der Prozessor 110 ist ferner dazu in der Lage, mittels Programminstruktionen 116 selbstständig eine Übermittlung der permutierten Messdaten an den Energieversorger 120 vorzunehmen. Beispielsweise könnte im Voraus festgelegt werden, in welchen zeitlichen Abständen eine regelmäßige Übertragung der permutierten Messdaten an den Energieversorger 120 zu Abrechnungszwecken stattzufinden hat. Auch hierzu können wieder Programminstruktionen zur Ausführung von Schritten eines kryptografischen Protokolls zur verschlüsselten Datenübertragung zum Einsatz kommen. Vorzugsweise kommt bei jeglicher Datenübertragung zwischen Gateway 102 und Energieversorger 120 eine Ende-zu-Ende-Verschlüsselung zum Einsatz.

Es sei ferner angemerkt, dass im Rahmen der vorliegenden Offenbarung für eine Kommunikation zwischen Gateway 102 und Energieversorger 120 nicht zwingend eine direkte Kommunikation zwischen den jeweiligen Interfaces 118 und 134 stattzufinden hat. Möglich ist auch, dass beispielsweise dem Gateway 102 ein Sicherheitsmodul zugeordnet ist, wobei dieses Sicherheitsmodul den eigentlichen Kommunikationsvorgang mit dem Energieversorger 120 vornimmt. Die Kommunikation wird durch das Sicherheitsmodul insofern kontrolliert, dass das Sicherheitsmodul einen Authentifizierungsprozess mit dem Energieversorger 120 sowie die verschlüsselte Datenübertragung mit dem Energieversorger 120 durchführen kann. Dem Gateway 102 selbst kommt damit lediglich die Funktion des Sammelns der Messdaten, der Permutation der Messdaten und des optionalen Anstoßens der Datenübermittlung mittels Programminstruktionen 116 über das Sicherheitsmodul an den Energieversorger 120 zu.

Wie in Figur 1 ferner ersichtlich, weist der Speicherbereich 104 des Gateways 102 verschiedene Tarifinformationen 106 zum Beispiel bezüglich eines Gastarifs, Stromtarifs oder Wassertarifs auf. Diese Tarifinformationen können entweder als rein statische Informationen vorliegen oder aber in Form von dynamisch ausführbaren Programminstruktionen. Im Falle des Vorliegens in Form von Programminstruktionen ist es möglich, dass die Art und Weise, wie Messdaten im Speicher 104 abgelegt werden und wie Messdaten in Verbindung mit den Programminstruktionen 114 erfasst werden, geregelt wird. Dies umfasst neben den Möglichkeit der Steuerung der Häufigkeit (Granularität) der Messdatenerfassung auch die Art und Weise, wann und wie eine Datenübermittlung an den Energieversorger 120 stattzufinden hat und ob die Messdaten 108 bereits durch das entsprechende Programm 106 durch den Gateway 102 vorab einer Vorauswertung unterzogen werden. Im Falle des Vorliegens in Form von Programminstruktionen könnte also eine Softwarekomponente des Energieversorgers die komplette Erfassung, Auswertung und Permutation der Messdaten regeln.

In einem Ausführungsbeispiel beinhalten jedoch die Tarifinformationen 106 zum Beispiel lediglich verschiedene Zeiträume, für welche ein bestimmter Energieabrechnungstarif einheitlich für den durch die Messdaten bestimmbaren Energieverbrauch gültig ist. In Abhängigkeit von diesen Zeiträumen ist daraufhin der Prozessor mittels der Programminstruktionen 112 in der Lage, die Permutation durchzuführen. Zum Beispiel wurden die Messdatenpunkte der Messdaten innerhalb verschiedener Zeiträume erfasst, wobei die Permutation ein Permutieren der Messdatenpunkte zwischen den verschiedenen Zeiträumen umfasst. Diese verschiedenen Zeiträume wurden dabei anhand der Tarifinformationen 106 bestimmt, und zwar insofern, dass eine Permutation nur zwischen solchen Zeiträumen stattfindet, für welche auch ein identischer Energieabrechnungstarif gültig ist.

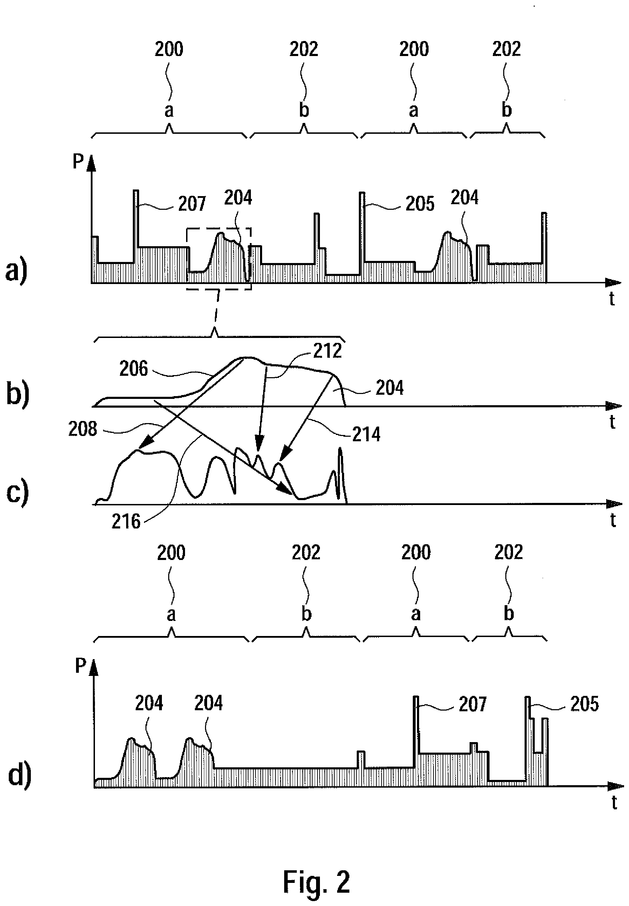

Im Folgenden sei die Durchführung der Permutation der Messdaten exemplarisch erläutert. In Figur 2a ist ein Leistungs-Zeitdiagramm ersichtlich, welches zum Beispiel einen "Stromverbrauch" in Abhängigkeit von der Zeit t wiedergibt. Die verbrauchte Leistung ist dabei durch P gekennzeichnet. In Figur 2a ist dabei bezüglich eines einzelnen Messparameters "Leistung der Phase 1" ein zugehöriger Verlauf des Leistungsprofils gezeigt. Für weitere Phasen des elektrischen Stroms (Phase 2, Phase 3) existiert in analoger Weise ein entsprechendes Zeit-Leistungsprofil.

Obwohl in Figur 2a die Leistung in Abhängigkeit von der Zeit als durchgezogene Linie gezeigt ist, handelt es sich bei der erfassten Leistung genaugenommen um verschiedene Messdatenpunkte, was in Figur 2b näher ersichtlich ist. Figur 2b ist dabei eine Vergrößerung des Bereichs 204 aus Figur 2a. Ersichtlich sind hier einzelnen Messdatenpunkte 206, welche in Abhängigkeit von der Zeit erfasst wurden. Da die Messpunkte relativ dicht gesetzt sind, sei im vorliegenden Fall davon ausgegangen, dass eine Leistungserfassung hochgranular, z.B. sekundengenau erfolgt.

Wie in Figur 2a ersichtlich, wiederholt sich das Verbrauchsprofil 204 zu zwei verschiedenen Zeitpunkten. Da Verbrauchsprofile eindeutig verschiedener Aktivitäten von elektrischen Stromverbrauchern zugeordnet werden können, könnte damit anhand des Auftretens dieses Leistungsprofils 204 durch einen Energieversorger identifiziert werden, was der Verbraucher zu den jeweiligen Zeitpunkten des Auftretens des Leistungsprofils 204 getan hat. Ist beispielsweise das Verbrauchsprofil 204 charakteristisch für das Schaltprofil eines Kühlschranks, könnte ein Energieverbraucher aus der Häufigkeit des Schaltvorgangs und der dadurch verbrauchten elektrischen Energie Rückschlüsse darüber ziehen, ob der Verbraucher gegebenenfalls Bedarf an einem energiesparenderen Kühlschrankmodell hat oder nicht.

Um solche Profilerstellungen von vornherein zu vermeiden, wird nun wie in den Figuren 2b und 2c exemplarisch für den Zeitbereich des Leistungsprofils 204 gezeigt, vorgegangen. Für den besagten Zeitraum erfolgt eine Permutation der einzelnen Messdatenpunkte, das heißt ein zeitliches Verändern der Reihenfolge der Messdatenpunkte. So wird beispielsweise einer der Messdatenpunkte 206 im Schritt 214 etwas nach vorne verschoben, hingegen einer der Messdatenpunkte 206 im Schritt 216 weit nach hinten verschoben. Weitere Verschiebungsschritte sind beispielsweise die Verschiebungsschritte 208 und 212. Insgesamt ergibt sich dadurch das in Figur 2c gezeigte Leistungsprofil, welches bezüglich der integralen Gesamtleistung, das heißt des Gesamtverbrauchs, identisch ist mit dem Leistungsprofil der Figur 2b. Nichtsdestotrotz wurde das Leistungsprofil 204 der Figur 2b so grundlegend zufällig verändert, dass daraus ein Rückschluss auf einen Schaltvorgang des obig beschriebenen Kühlschranks nicht mehr gezogen werden kann. Das bezüglich Figur 2b und 2c gezeigte Permutieren muss sich dabei jedoch nicht auf einen einzelnen zusammenhängenden Zeitraum beschränken.

Beispielsweise ist es möglich, dass der Verbraucher bezüglich seines StromEnergieverbrauchs zwei verschiedene Energieabrechnungstarife a und b gewählt hat. Diese Energieabrechnungstarife a und b sind dabei zu verschiedenen Zeiträumen 200 und 202 gültig. Da den Stromanbieter (Energieversorger) letztlich nur interessiert, in welchen Tarif-Zeitintervallen wie viel Strom verbraucht wurde, kann nun eine Permutation der Messdatenpunkte innerhalb der Zeiträume 200 und getrennt davon eine Permutation der Messdatenpunkte in den Zeiträumen 202 stattfinden. Anders ausgedrückt werden die Messdatenpunkte innerhalb verschiedener Zeiträume eines Satzes von Zeiträumen 200 erfasst, wobei die Permutation ein Permutieren der Messdatenpunkte zwischen den verschiedenen Zeiträumen 200 erfolgt. Selbiges gilt für davon unabhängig für die Zeiträume 202.

Das Ergebnis einer entsprechenden Permutierung ist in Figur 2b gezeigt. So wurden bezüglich des Zeitraums 200 die charakteristischen Leistungsprofile 204 zufällig zeitlich nach vorne verschoben. Die charakteristische Leistungsspitze 207 des Zeitraums 200 wurde hingegen weit nach hinten verschoben und die Leistungsspitze 205 des Zeitraums 202 wurde ebenfalls weit nach hinten verschoben. Damit ergibt sich in Figur 2d ein vollkommen anderes Leistungsprofil als auch in Figur 2a. Nichtsdestotrotz ist die Summenleistung, das heißt die über den gesamten Zeitraum initiierte Leistung in Figur 2a und 2d identisch.

Der Übersichtlichkeit halber wurde in Figur 2d lediglich eine Permutation der charakteristischen Profile 204, 205 und 207 selbst vorgenommen. In der Praxis wird jedoch wie in Figuren 2b und c gezeigt eine Permutation einzelner Messdatenpunkte stattfinden, sodass durch ein zufälliges Permutationsverfahren das charakteristische Profil aus Figur 2a in der Realität nicht mehr als solches - auch nicht in einzelnen zeitlichen Bereichen der Verbrauchsprofile - ersichtlich sein wird.

Möglich ist auch, eine Permutation von Messdatenpunkten zwischen verschiedenen Messparametern durchzuführen. Würde beispielsweise davon ausgegangen, dass in Figur 2a die Phasenleistung einer Phase 1 und in Figur 2d die Phasenleistung einer Phase 2 gezeigt ist, so könnte wiederum für die Zeiträume, für welche ein gleicher Energieabrechnungstarif gültig ist, eine Permutation der Messdaten zwischen den Messparametern selbst, das heißt eine Permutation zwischen Figur 2a und Figur 2d stattfinden.

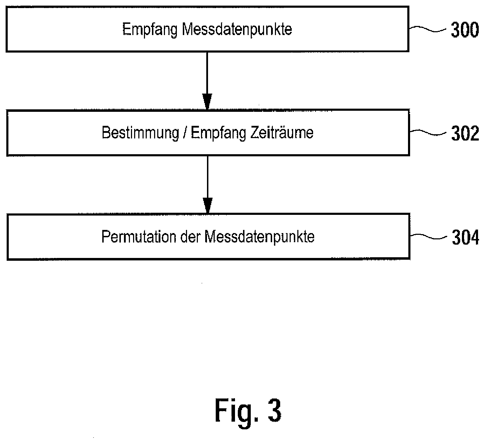

Die Figur 3 zeigt ein Flussdiagramm eines Verfahrens zur Anonymisierung von Messdaten, wobei das Verfahren in Schritt 300 mit dem Empfang von Messdatenpunkten beginnt. Nach Empfang der Messdatenpunkte in Schritt 300 erfolgt eine Bestimmung oder ein Empfang von Zeiträumen, für welche ein gleicher Energieabrechnungstarif für den durch die Messdaten bestimmbaren Energieverbrauch gültig ist. Schritt 102 ist dabei optional, sodass unmittelbar nach Schritt 300 Schritt 304 durchgeführt werden kann. Entweder nach Durchführung von Schritt 300 oder nach Durchführung von Schritt 302 erfolgt daraufhin die Permutation der Messdatenpunkte in Schritt 304.

### Bezugszeichenliste

- 100: Smart-Meter
- 102: Gateway
- 104: Speicher
- 106: Tarif
- 108: Messdaten
- 110: Prozessor
- 112: Permutation
- 114: Datenerfassung
- 116: Datenübermittlung
- 118: Interface
- 120: Computersystem (Energieversorger)
- 122: Speicher
- 124: Messdaten
- 126: Prozessor
- 128: Datenerfassung
- 130: Verbrauchsabrechnung
- 132: kryptografisches Protokoll
- 134: Interface
- 200: Zeitraum
- 202: Zeitraum
- 204: Leistungsprofil
- 205: Leistungsprofil
- 206: Messdatenpunkt
- 207: Leistungsprofil
- 208: Schritt
- 212: Schritt
- 214: Schritt
- 216: Schritt

## Patentansprüche

1. Verfahren zur Anonymisierung von Messdaten, wobei die Messdaten (108) mit einem Smart Meter (100) erfasst wurden, wobei das Verfahren eine Permutation der Messdaten (108) umfasst, wobei die Granularität beibehalten wird und die Permutation die Anonymität der Messdaten erhöht.

2. Verfahren nach Anspruch 1, wobei die Permutation durchgeführt wird bevor die Messdaten (108) für eine Abfrage durch einen Energieversorger (120) oder einen Messstellenbetreiber bereitgestellt werden.

3. Verfahren nach Anspruch 1 oder 2, wobei die Messdaten (108) zufällig permutiert werden.

4. Verfahren nach einem der vorigen Ansprüche, wobei die Messdaten (108) als Messdatenpunkte (206) eines Messparameters mit einer zeitlichen Reihenfolge erfasst wurden, wobei durch die Permutation die zeitliche Reihenfolge der Messdatenpunkte (206) permutiert wird.

5. Verfahren nach einem der vorigen Ansprüche, wobei die Messdaten (108) Messdatenpunkte (206) verschiedener Messparameter umfassen, wobei die Permutation ein Permutieren der Messdatenpunkte (206) zwischen den verschiedenen Messparametern umfasst.

6. Verfahren nach Anspruch 4 oder 5, wobei die Messdatenpunkte (206) innerhalb verschiedener Zeiträume (200; 202) eines Satzes von Zeiträumen erfasst wurden, wobei die Permutation ein Permutieren der Messdatenpunkte (206) zwischen den verschiedenen Zeiträumen (200; 202) umfasst.

7. Verfahren nach Anspruch 6, wobei die Messdaten (108) der Bestimmung eines Energieverbrauchs dienen, wobei der Satz von Zeiträumen aus den Zeiträumen (200; 202) besteht, für welche ein gleicher Energieabrechnungstarif (a; b) für den durch die Messdaten (108) bestimmbaren Energieverbrauch gültig ist.

8. Verfahren nach Anspruch 7, wobei das Verfahren ferner einen Empfang oder eine Bestimmung des Satzes von Zeiträumen (200; 202) umfasst.

9. Verfahren nach Anspruch 8, wobei die Bestimmung des Satzes von Zeiträumen (200; 202) durch den Smart Meter (100) oder einen dem Smart Meter (100) zugeordneten Smart Meter Gateway (102) erfolgt.

10. Verfahren nach einem der vorigen Ansprüche 6 bis 9, wobei die verschiedenen Zeiträume (200; 202) zeitlich voneinander beabstandet sind.

11. Verfahren nach einem der vorigen Ansprüche, wobei die Permutation durch den Smart Meter (100) oder einen dem Smart Meter (100) zugeordneten Smart Meter Gateway (102) erfolgt.

12. Computerprogrammprodukt (112) mit von einem Prozessor ausführbaren Instruktionen zur Durchführung der Verfahrensschritte gemäß einem der vorigen Ansprüche.

13. Vorrichtung (102) zur Anonymisierung von Messdaten, wobei die Messdaten (108) mit einem Smart Meter (100) erfasst wurden, wobei die Vorrichtung (102) dazu ausgebildet ist, eine Permutation der Messdaten (108) durchzuführen, wobei die Granularität beibehalten wird und die Permutation die Anonymität der Messdaten erhöht.

## Claims

1. A method for the anonymisation of measurement data, wherein the measurement data (108) were acquired using a smart meter (100), wherein the method comprises a permutation of the measurement data (108), wherein the granularity is retained and the permutation increases the anonymity of the measurement data.

2. The method according to claim 1, wherein the permutation is performed before the measurement data (108) are provided for a querying by an energy supplier (120) or a meter operator.

3. The method according to claim 1 or 2, wherein the measurement data (108) are permutated randomly.

4. The method according to any one of the preceding claims, wherein the measurement data (108) were acquired as measurement data dots (206) of a measurement parameter with a time sequence, wherein the time sequence of the measurement data dots (206) is permutated as a result of the permutation.

5. The method according to any one of the preceding claims, wherein the measurement data (108) comprise measurement data dots (206) of various measurement parameters, wherein the permutation comprises a permutation of the measurement data dots (206) between the various measurement parameters.

6. The method according to claim 4 or 5, wherein the measurement data dots (206) were acquired within various time periods (200; 202) of a set of time periods, wherein the permutation comprises a permutation of the measurement data dots (206) between the various time periods (200; 202).

7. The method according to claim 6, wherein the measurement data (108) are used to determine an energy consumption, wherein the set of time periods consists of the time periods (200; 202) for which the same energy billing tariff (a; b) is valid for the energy consumption determinable by the measurement data (108).

8. The method according to claim 7, wherein the method also comprises the receipt or determination of the set of time periods (200; 202).

9. The method according to claim 8, wherein the set of time periods (200; 202) is determined by the smart meter (100) or a smart meter gateway (102) associated with the smart meter (100).

10. The method according to any one of preceding claims 6 to 9, wherein the various time periods (200; 202) are distanced from one another over time.

11. The method according to any one of the preceding claims, wherein the permutation is performed by the smart meter (100) or a smart meter gateway (102) associated with the smart meter (100).

12. A computer program product (112) with instructions that can be executed by a processor in order to carry out the method steps according to any one of the preceding claims.

13. A device (102) for the anonymisation of measurement data, wherein the measurement data (108) were acquired using a smart meter (100), wherein the device (102) is designed to perform a permutation of the measurement data (108), wherein the granularity is retained and the permutation increases the anonymity of the measurement data

## Revendications

1. Procédé d'anonymisation de données de mesure, dans lequel les données de mesure (108) ont été saisies avec un compteur intelligent (100), où le procédé comprend une permutation des données de mesure (108), où la granularité est conservée et la permutation augmente l'anonymat des données de mesure.

2. Procédé selon la revendication 1, dans lequel la permutation est effectuée avant que les données de mesure (108) ne soient mises à disposition par une interrogation par un fournisseur d'énergie (120) ou un gestionnaire de compteurs.

3. Procédé selon la revendication 1 ou 2, dans lequel les données de mesure (108) sont permutées de manière aléatoire.

4. Procédé selon l'une des revendications précédentes, dans lequel les données de mesure (108) ont été saisies sous forme de points de données de mesure (206) d'un paramètre de mesure avec un ordre chronologique, où l'ordre chronologique des points de données de mesure (206) est permuté par la permutation.

5. Procédé selon l'une des revendications précédentes, dans lequel les données de mesure (108) comprennent des points de données de mesure (206) de divers paramètres de mesure, où la permutation comprend une permutation des points de données de mesure (206) entre les divers paramètres de mesure.

6. Procédé selon la revendication 4 ou 5, dans lequel les points de données de mesure (206) ont été saisis en l'espace de divers intervalles de temps (200 ; 200) d'un ensemble d'intervalles de temps, où la permutation comprend une permutation des points de données de mesure (206) entre les divers intervalles de temps (200 ; 202).

7. Procédé selon la revendication 6, dans lequel les données de mesure (108) servent à la détermination d'une consommation d'énergie, où l'ensemble des intervalles de temps est constitué des intervalles de temps pour lesquels une tarification d'énergie identique (a ; b) est valable pour la consommation d'énergie pouvant être déterminée par les données de mesure (108).

8. Procédé selon la revendication 7, où le procédé comprend en outre une réception ou une détermination de l'ensemble des intervalles de temps (200 ; 202).

9. Procédé selon la revendication 8, dans lequel la détermination d'un ensemble d'intervalles de temps (200 ; 202) a lieu par le compteur intelligent (100) ou par une passerelle de compteur intelligent (102) associée au compteur intelligent (100).

10. Procédé selon l'une des revendications précédentes 6 à 9, dans lequel les divers intervalles de temps (200 ; 202) sont espacés les uns des autres dans le temps.

11. Procédé selon l'une des revendications précédentes, dans lequel la permutation a lieu par le compteur intelligent (100) ou une passerelle de compteur intelligent (102) associée au compteur intelligent (100).

12. Produit de programme informatique (112) doté d'instructions exécutables par un processeur pour la réalisation des étapes de procédé selon l'une des revendications précédentes.

13. Dispositif (102) d'anonymisation de données de mesure, dans lequel les données de mesure (108) ont été saisies par un compteur intelligent (100), où le dispositif (102) est conçu pour exécuter une permutation des données de mesure (108), où la granularité est conservée et la permutation augmente l'anonymat des données de mesure.
